Europäisches Patentamt

European Patent Office

Office européen des brevets

(11) Veröffentlichungsnummer: **0 446 664 A1**

## (12) EUROPÄISCHE PATENTANMELDUNG

(21) Anmeldenummer: **91102389.3**

(22) Anmeldetag: **20.02.91**

(51) Int. Cl.5: **B28B 13/02**, B28B 7/34, B22F 3/00, B22F 5/00, B22F 3/12

(30) Priorität: **14.03.90 CH 816/90**

(43) Veröffentlichungstag der Anmeldung: **18.09.91 Patentblatt 91/38**

(84) Benannte Vertragsstaaten: **AT CH DE FR GB IT LI NL SE**

(71) Anmelder: **ASEA BROWN BOVERI AG**

**CH-5401 Baden(CH)**

(72) Erfinder: **Feichtinger, Heinrich, Prof. Dr. Im Bad 1 CH-8128 Hinteregg(CH)**

(54) **Verfahren und Vorrichtung zur Herstellung eines beliebig kompliziert geformten Bauteils durch Erzeugung eines dichtgepakten Formkörpers ausgehend von einem rieselfähigen Pulver.**

(57) Verfahren zur Herstellung eines komplizierten Bauteils aus Metall, Keramik oder Kunststoff, wobei Pulver (7) mittels Transportgas in eine unter vermindertem Druck stehende, sich in einem Behälter (11) befindliche, gasdurchlässige Negativform (14) eingeblasen und vorverfertigt wird, worauf die Negativform (14) aus dem Behälter (11) herausgenommen und der Grünling entweder in einer separaten keramischen Stützmasse oder in der aus Keramik bestehenden Negativform (14) selbst gesintert wird. Varianten zur Herstellung eines Hohlkörpers oder eines geschichteten Körpers als Bauteil durch Programmierung des Pulver-Einschiessens.

FIG.3

## TECHNISCHES GEBIET

Herstellung von komplizierten Bauteilen aus metallischen oder keramischen Werkstoffen, wobei als Ausgangsmaterialien Pulver verwendet werden. Fragen des Sinterns und heiss-isostatischen Pressens im Hinblick auf das Schwinden.

Die Erfindung bezieht sich auf die Weiterentwicklung, Vervollkommnung und Vereinfachung pulvermetallurgischer Fertigungsmethoden für die Herstellung von Werkstücken mit vergleichsweise komplizierten Formen, wo die Probleme der Schwindung beim Sintern eine wichtige Rolle spielen. Anwendungsgebiet ist vor allem der Bereich von Bauteilen des Turbinenbaus.

Im engeren Sinne betrifft die Erfindung ein Verfahren zur Herstellung eines beliebig kompliziert geformten Bauteils aus einem metallischen oder keramischen Werkstoff oder einem Kunststoff durch Erzeugung eines dichtgepackten Formkörpers ausgehend von einem rieselfähigen Pulver oder einer Pulvermischung durch Einblasen des besagten, durch ein Transportgas fluidisierten Pulvers in eine unter vermindertem Druck stehende Negativform und Weiterbehandlung des vorverdichteten Körpers, indem dieser einem Sinterprozess unterworfen wird. Des weiteren betrifft die Erfindung eine Vorrichtung zur Durchführung des Verfahrens.

## STAND DER TECHNIK

Bei zahlreichen Fertigungsmethoden in der metallurgischen und keramischen Industrie wird von Pulvern ausgegangen. Pulvermetallurgische Verfahren haben den Vorteil, dass sich praktisch jede beliebige Form erzielen lässt. Es besteht die Absicht, Werkstücke pulvermetallurgisch als Fertigteile herzustellen, um teure Bearbeitungskosten teilweise oder ganz einsparen zu können. Die bekannten Verfahren zur Erzielung von Nettoformen (Net-Shape) oder Nahezu-Nettoformen (Near-Net-Shape) der Werkstücke gehen alle von Aufschlämmungen (Schlicker, Paste) von Pulvern in Lösungsmitteln unter Verwendung eines Binders aus. Als Zusätze zu Pulvermischungen werden verwendet:

- Wasser + Binder + Additive (Schlickergiessen, Gefriertrocknen: "Slip casting, Freeze Drying")
- Wasser + Zellulose (Metall-Pulver-Spritzgiessen nach Rivers: "MIM by Rivers Process")
- Thermoplaste (Metall-Pulver-Spritzgiessen)

Bei allen diesen nassmechanischen Methoden treten zahlreiche Schwierigkeiten bezüglich Qualität, Freiheit der Gestaltung, Reproduzierbarkeit und Wahl der Zusammensetzung auf:

- Blasenbildung beim Mischen von Pulver mit Binder und Lösungsmittel.
- Begrenzung der Wandstärke der Werkstücke (z.B. max. 5-10 mm für "MIM"), da andererseits der Binder nicht mehr vollständig entfernt werden kann.
- Auftreten von Binderrückständen (z.B. Kohlenstoff), die auch nach dem "Ausbrennen" des Binders im Werkstück verbleiben und dessen Zusammensetzung unkontrolliert beeinträchtigen können.
- Notwendigkeit der Neuauswahl/Neuentwicklung des Binders bei Übergang auf andere Formen und/oder Zusammensetzungen der Werkstücke.

Beim Metall-Spritzgiessen ("Metal Injection Molding"; MIM) wird eine Mischung aus dem zu kompaktierenden Metallpulver zusammen mit einem geeigneten Thermoplast entsprechend der Spritzguss-Technik in eine Form eingeschossen. Eine Zusammenfassung der Methoden des "Metal Injection Molding" wird in einem Kapitel des Metals Handbook gegeben.

Eine besondere Problematik dieser Technik ist einerseits die Tatsache, dass im allgemeinen wesentlich feinere Pulver zum Einsatz kommen müssen, als dies normalerweise in der Pulvermetallurgie üblich ist, andererseits muss der organische Binder durch einen aufwendigen Prozess vor dem eigentlichen Sinterprozess entfernt werden, was zu einer beträchtlichen Verteuerung des Prozesses führt.

Aus der Giessereitechnik ist das Vakuumformverfahren bekannt, welches zur Herstellung von Giessformen aus feuerfestem körnigen Formstoff, in der Regel Quarzsand, dient. Durch Evakuierung der Luft aus einem folienumschlossenen Haufwerk binderfreien Sands entsteht in diesem ein Unterdruck, wodurch ein Kompressionsdruck der aussen anliegenden Gasatmosphäre über die Folie auf die Sandschüttung ausgeübt wird. Die dadurch bedingten Druckspannungen zwischen den Körnern verhindern die gegenseitige Beweglichkeit derselben, wodurch aus einem lockeren Haufwerk ein mechanisch widerstandsfähiger Körper mit definierter Form entsteht.

Bei der Herstellung von Formkörpern, welche einer anschliessenden Sinterung unterworfen werden, ist die Gleichmässigkeit der Pulverschüttung an allen Stellen des Formkörpers von hoher Bedeutung, da das lokale Schwindmass und damit die Formgenauigkeit eine Funktion der lokalen Schüttdichte sind.

Es gibt Verfahren aus dem Gebiet der Pulvermetallurgie, wo Gemische eines Metallpulvers mit einer verflüssigten organischen Phase nach dem Spritzgussverfahren in Formen eingespritzt werden. Nach dem Füllvorgang entsteht ein kompakter Verbundkörper mit gleichmässiger Dichte, aus dem der organische Binder vor dem Einsetzen des eigentlichen Sinterprozesses entfernt werden muss.

Es gibt andere Verfahren, bei denen im wesentlichen trockene Pulver unter Vakuum in eine Form eingefüllt werden. Dieser Vorgang kann z.B. noch durch einen geeigneten Vibrations- oder Rüttelvorgang unterstützt werden. Allerdings sind der Komplexität der Formgebung infolge des Reibungswiderstand des Pulvers Grenzen gesetzt, bzw. es besteht die Gefahr, dass die verschiedenen Kornfraktionen eines Pulvers unter dem Einfluss der Pulverbewegung, insbesondere unter der Einwirkung von Vibrationen, entmischen, wodurch ein inhomogener Sinterkörper entsteht.

Mit Hilfe eines Verfahrens wird zum Beispiel ein Formkörper so hergestellt, dass eine rieselfähige Formmasse mittels eines Transportgases fluidisiert wird und in dieser Weise in den Innenraum einer unter Unterdruck stehenden Form gelangt, welche an bestimmten Stellen Absaugöffnungen für die Ableitung des Transportgases enthält. Ein wesentlicher Teil der Beschreibung dieses Verfahrens ist der optimalen Dimensionierung und Anordnung dieser Absaugöffnungen, bzw. dem optimalen zeitlichen Ablauf des Einblas- und Absaug-Prozesses gewidmet, da sowohl die geometrische Anordnung wie auch der zeitliche Ablauf von grösster Bedeutung für die Erzeugung eines Formkörpers mit gleichmässiger Schüttdichte sind. Beim Eindringen des fluidisierten Pulvers in den Innenraum der Form kommt es zur Expansion des Gases und damit zur kinetischen Beschleunigung der Pulverpartikel, welche gegen die Formwand geschleudert werden. Da die Formwand jedoch in wesentlichen Teilen gasundurchlässig ist, kommt es lediglich durch die kinetische Energie der Kornpartikel zu einer Wandbeschichtung. .Spezielle Vorkehrungen müssen insbesondere ergriffen werden, um eine frühzeitige Verstopfung der Abgaskanäle durch bevorzugt in diese Richtung fliegendes Pulver zu vermeiden.

Zum Stand der Technik werden die nachfolgenden Druckschriften zitiert:
- GB Pat.Appl. 2088414
- EP Pat.Appl. 0191409
- DE-A-3101236
- DE-A-3128347
- DE-A-3128348
- DE-A-3542332
- R. Billet, "PLASTIC METALS: From Fiction to Reality with Injection Molded P/M Materials", Parmatech Corporation, San Rafael, California, P/M-82 in Europe Int.PM-Conf. Florence I 1982.
- Göran Sjöberg, "Powder Casting and Metal Injection Moulding", Manuscript submitted to Metal Powder Report September 1987
- Henry H. Hausner, "Slip Casting of Metal Powders", in "Perspectives in Powder Metallurgy", Hausner et al., Plenum Press 1967

Die bekannten Verfahren lassen zu wünschen übrig. Es besteht daher ein Bedürfnis nach Verbesserung und Weiterentwicklung der pulvermetallurgischen/pulverkeramischen Fertigungsmethoden.

DARSTELLUNG DER ERFINDUNG

Der Erfindung liegt die Aufgabe zugrunde, ein Verfahren sowie eine Vorrichtung anzugeben, mit welchem, ausgehend von rieselfähigen Metall- oder Keramikpulvern ein vergleichsweise kompliziert geformtes Werkstück beliebigen Querschnittes und unbegrenzter Wandstärke gefertigt werden kann. Dabei soll für den Grünling eine zur Weiterverarbeitung hinreichende Grünfestigkeit erzielt werden. Das Verfahren soll ein reproduzierbares Fertigerzeugnis liefern, das nicht mehr oder höchstens geringfügig zusätzlich bearbeitet werden muss. Bei der Pulververarbeitung sollen Blasen sowie unerwünschte schädliche Rückstände vermieden werden. Das Verfahren soll bezüglich Auswahl der Form und der Zusammensetzung des herzustellenden Werkstücks grösstmögliche Freizügigkeit und Universalität gewährleisten.

Diese Aufgabe wird dadurch gelöst, dass das eingangs erwähnte Verfahren aus den nachfolgenden Teilschritten besteht:
- Einführen einer die Gestalt des Bauteils bestimmenden, aus einem porösen, gasdurchlässigen, jedoch für das Pulver zumindest in der Oberflächenzone der Innenwand nicht durchlässigen Material bestehenden Negativform in einen unter vermindertem Druck stehenden Behälter, wobei für das Aufschleudern des Pulvers auf die Innenwand gleichmässige Gasströmungsverhältnisse geschaffen werden,
- Einblasen des Pulvers in den Hohlraum der Negativform unter Verwendung eines unter hohem Druck stehenden Transportgases, wobei eine für die Weiterbehandlung des Grünlings ausreichende Grünfestigkeit erzielt wird,
- Fluten des Behälters zur Herstellung des Druckausgleichs in der Negativform,
- Herausnehmen der Negativform mitsamt dem Grünling aus dem Behälter zwecks Weiterbehandlung,
- Sintern des Grünlings.

Die Aufgabe wird ferner dadurch gelöst, dass die Vorrichtung zur Durchführung des Verfahrens aus mindestens einem mit einem Ventil für die Zufuhr des Transportgases und einem Sperrorgan für das Einblasen des Pulvers versehenen Vorratsbehälter für das letztere, einem mit einer Dichtung versehenen, unter vermindertem Druck stehenden und ein Auslassventil aufweisenden Behälter sowie einer in diesem untergebrachten gasdurchlässigen Negativform besteht.

Zusammenfassend sei folgendes bemerkt: Zweck der Erfindung ist die Herstellung von Formkörpern aus rieselfähigen Pulvern, welche nach dem Einbringen in eine Form entweder durch eine Binderphase eine Grünfestigkeit erlangen, sodass sie entformt und einem Sinterprozess zugeführt werden können oder die innerhalb dieser Form selbst einem Sinterprozess unterworfen werden, wobei die Form in diesem Falle als Hinterstützung des Formkörpers dient und unter dem Einfluss der Temperatur keinerlei Reaktionen mit dem Formkörper eingehen darf, bzw. nach Abschluss des Sintervorgangs von der Oberfläche des Formkörpers entfernbar sein muss. Dabei kann es sich bei dem Pulver, aus welchem der Formkörper aufgebaut ist, um ein Metall- oder ein Keramik- oder auch Kunststoffpulver handeln, es ist aber auch ein Gemisch von mindestens zwei der genannten Komponenten möglich.

## WEG ZUR AUSFÜHRUNG DER ERFINDUNG

Die Erfindung wird durch die nachfolgenden Figuren näher erläutert.

Dabei zeigt:

Fig.1     eine schematische Ansicht (in Strömungsrichtung der Gasströmung gesehen) einer idealisierten Schüttung von globulitischen Pulverpartikeln (hexagonal dichteste Kugelpackung),

Fig.2     einen Aufriss/Schnitt (senkrecht zur Strömungsrichtung der Gasströmung gesehen) einer idealisierten Schüttung von globulitischen Pulverpartikeln (hexagonal dichteste Kugelpackung) an der Wand einer Negativform,

Fig.3     einen Aufriss/Schnitt einer Vorrichtung zur Durchführung des Verfahrens mit teilweise gefüllter Negativform,

Fig.4     einen Aufriss/Schnitt einer Vorrichtung zur Durchführung des Verfahrens mit Berstfolie und Strömungsblenden an der Negativform vor dem Einblasen des Pulvers,

Fig.5     einen Aufriss/Schnitt einer Vorrichtung zur Durchführung des Verfahrens mit mehreren Vorratsbehältern für verschiedene Pulver bei teilweise gefüllter Negativform

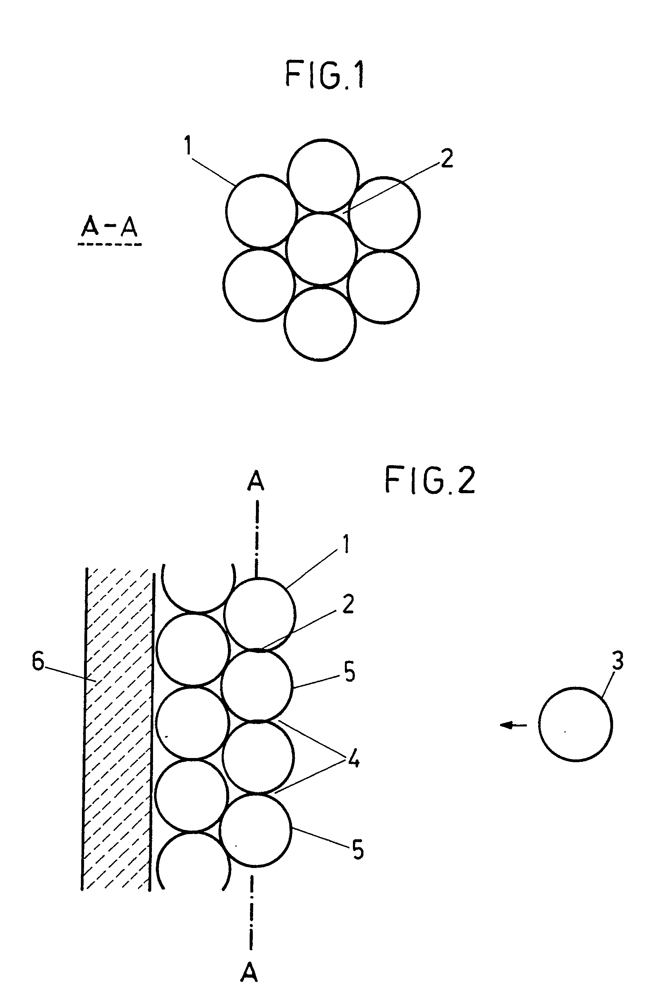

In Fig.1 ist eine schematische Ansicht (in Strömungsrichtung der Gasströmung gesehen) einer idealisierten Schüttung von globulitischen Pulverpartikeln (hexagonal dichteste Kugelpackung) wiedergegeben. 1 ist ein idealisiertes globulitisches Pulverpartikel in dichtester Schüttung (vereinfacht als Kugel dargestellt). 2 ist der offenporige Raum zwischen benachbarten Pulverpartikeln (Strömungskanal für Gasströmung).

Fig.2 zeigt einen Aufriss/ Schnitt (senkrecht zur Strömungsrichtung der Gasströmung gesehen) einer idealisierten Schüttung von globulitischen Pulverpartikeln (hexagonal dichteste Kugelpackung) an der Wand einer Negativform. Die Bezugszeichen 1 und 2 sind mit denjenigen der Fig. 1 identisch. 3 ist ein Pulverpartikel im Anflug senkrecht auf die Innenwand der Negativform. 4 ist die unter der Gasströmung sich einstellende Stelle hoher Geschwindigkeit und niederen Druckes, 5 diejenige niedriger Geschwindigkeit und hohen Druckes (Staupunkt). 6 stellt die gasdurchlässige Wand der porösen (offenporigen) Negativform dar.

Beim erfindungsgemässen Verfahren besteht die gesamte Wand 6 der Negativform aus einem gasdurchlässigen porösen Material, wobei die Porosität zumindestens im Bereich der Innenfläche der Form einen Porendurchmesser aufweist, welcher das Eindringen von Pulverkörnern auch der geringsten Grösse verhindert. Da die gesamte Innenfläche der unter einem Unterdruck stehenden und von aussen mit Unterdruck beaufschlagten gasdurchlässigen Negativform 6 für den Gastransport zur Verfügung steht, kann das fluidisierte Pulver (Partikel) grundsätzlich an jede Stelle der Form 6 gelangen, wobei ein gleichmässiger Beschichtungsvorgang dadurch selbstgehend gesteuert wird, dass Stellen der Wand 6, welche in stärkerer Weise mit Pulver beschichtet wurden, einen grösseren Strömungswiderstand darstellen und deshalb weiteres fluidisiertes Pulver an jene Stellen der Wand 6 dirigieren, wo die Schichtdicke noch nicht so stark ist und deshalb ein geringerer Strömungswiderstand existiert. Durch die Tatsache, dass sich der Formkörper schichtweise von der Wand 6 zur Mitte aus der fluidisierten Gas/Pulver-Phase aufbaut, ist eine sehr dichte Packung möglich, da die einzelnen auftreffenden Pulverkörner nicht im dichten Verband eintreffen und damit in ihrer Restbeweglichkeit behindert sind sondern noch eine gewisse laterale Bewegungsfreiheit besitzen.

Dieser Vorgang wird noch durch ein aerodynamisches Phänomen unterstützt, welches in Fig. 1 in Strömungsrichtung und in Fig. 2 senkrecht dazu schematisch dargestellt ist. Diese Darstellung soll im Sinne der vereinfachten Betrachtung mit Partikeln 1 in Form von Kugeln gleicher Grösse angestellt werden. Die dabei gemachten Beobachtungen können jedoch sinngemäss auch auf Schüttungen mit verschieden grossen Kugeln, bzw. mit Körpern, welche von der idealen Kugelgestalt abweichen, übertragen werden. Wird eine dichteste Kugelpackung von einer Gasströmung durchflossen, so tritt der Gasstrom an der Schüttoberfläche an den offenporigen Räumen 2 in die Schüttung ein, wo drei Kugeln aneinanderstossen. An diesem Strömungskanal befindet sich eine Stelle 4 mit erhöhter Geschwindigkeit und erniedrigtem Druck, während direkt vor den Kugeln eine Stelle 5 mit niedriger Geschwindigkeit (Staupunkt) existiert. Fliegt nun eine weitere Kugel (Pulverpartikel 3) gegen eine solche Schüttung, so wird sie unmittelbar vor dem Auftreffen auf diese Schüttung in einen dieser Strömungskanäle abgelenkt und gelangt deshalb zielbewusst an eine Stelle, welche der dichtesten Packung entspricht. Sobald sie sich in dieser Position befindet, stellt sie ein Strömungshindernis dar, d.h. die weiteren Kugeln werden automatisch durch das von ihr mitbeeinflusste Strömungsfeld neben ihr angeordnet. Dieser Effekt kann nur bei einer senkrecht durchströmten Schüttung auftreten, welche durch eine gasdurchlässige Wand 6 hinterstützt wird. Falls diese Wand nur einige Gasauslässe hat, kann dieser Effekt an allen Stellen der Form, wo keine Gasdurchlässigkeit vorhanden ist, nicht stattfinden. Aus der Tatsache, dass beim erfindungsgemässen Verfahren die gesamte Innenfläche der Wand 6 für den Abtransport des fluidisierenden Gases zur Verfügung steht, ergibt sich auch eine langsamere Strömungskinetik der Pulverkörner im Bereich der Wand 6, da die Strömung sich ja auf eine grosse Fläche verteilen kann und damit eine verminderte Energie beim Aufschlag resultiert, wodurch sowohl das Korn wie auch die Wand 6 geschont werden.

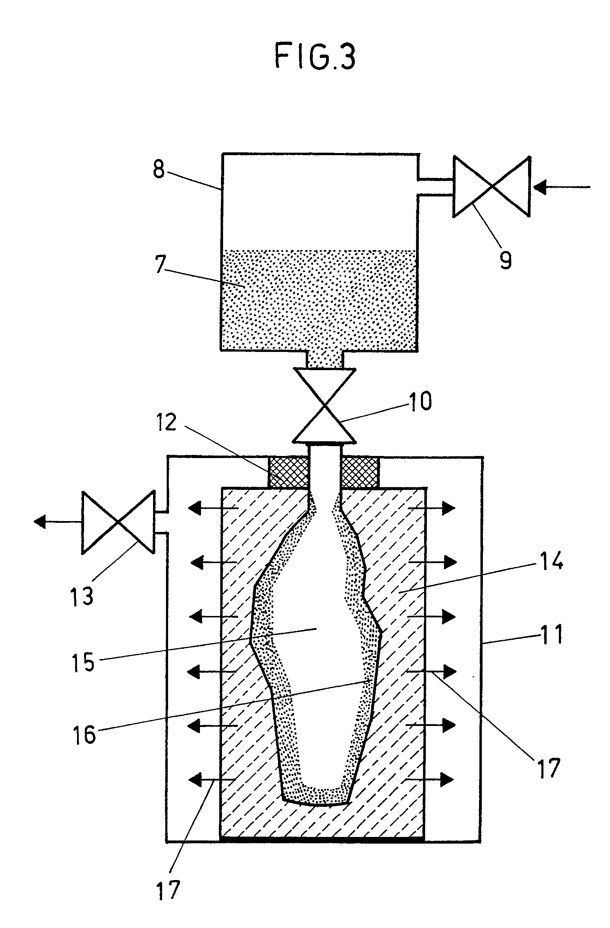

Fig.3 bezieht sich auf einen Aufriss/ Schnitt einer Vorrichtung zur Durchführung des Verfahrens mit teilweise gefüllter Negativform. 7 ist das zu verarbeitende rieselfähige Pulver (Metall, Keramik, Kunststoff), das sich zu Beginn des Verfahrensablaufs im Vorratsbehälter 8 befindet. 9 ist ein Ventil für die Zufuhr des für die Fluidisierung des Pulvers 7 benötigten Transportgases. Der Vorratsbehälter 8 ist unten durch ein Sperrorgan 10 für das Pulver 7 abgeschlossen. Dieses Sperrorgan 10 besteht aus einem Ventil, Absperrhahn, Schieber, oder aus einer Berstfolie etc. An das Sperrorgan 10 ist unter Zwischenschaltung einer Dichtung 12 ein unter vermindertem Druck stehender Behälter 11 angeschlossen. Dieser ist mit einem Auslassventil (Entlüftungsventil 13) versehen, welches über eine Leitung an eine Vakuumpumpe angeschlossen ist (nicht gezeichnet). Im Behälter 11 befindet sich eine gasdurchlässige geteilte oder ungeteilte Negativform 14, meist aus keramischem Material. 15 ist der Hohlraum (Innenraum) der Negativform 14. 16 stellt die auf die Innenwand der Negativform 14 aufgeschleuderte Pulverschicht dar. Es ist der momentane Zustand nach teilweiser Füllung des Hohlraums 15 kurz nach Beginn des Einblasvorgangs gezeichnet. 17 ist je eine Trajektorie der Gasströmung, als Pfeil dargestellt.

Es handelt sich hier um ein Schema des erfindungsgemässen Verfahrens. Dabei befindet sich das Pulver 7 in einem Vorratsbehälter 8, welcher über das Ventil 9 unter Gasdruck gesetzt wird. Über ein im vorliegenden Fall nicht näher bezeichnetes Sperrorgan 10, welches z.B. aus einem elektromagnetischen Ventil bestehen kann, gelangt das Pulver nach dessen Öffnung in den unter einem Unterdruck stehenden Innenraum einer porösen und gasdurchlässigen Form 14, wobei diese Form sich ihrerseits im Inneren eines Unterdruck-Behälters 11 befindet, welcher über eine Saugleitung mit Ventil 13 evakuiert werden kann. Die Form 14 wird mittels eines Dichtungselementes 12 gegen die Einlassöffnung des Unterdruck-Behälters 11 bzw. das Sperrorgan 10 abgedichtet. Die Schicht 16 entspricht einem momentanen Zustand, wie er sich unmittelbar nach Öffnung des Sperrorgans 10 ergibt, wo erst ein Teil des Pulvers in den Innenraum der Form eingetreten ist und die Wand mehr oder weniger gleichmässig bedeckt. Dieser Zustand tritt aber in ähnlicher Form auch ein, wenn die Pulvermenge geringer ist, als dem Innenvolumen der Form entspricht, wodurch ein Hohlkörper entsteht.

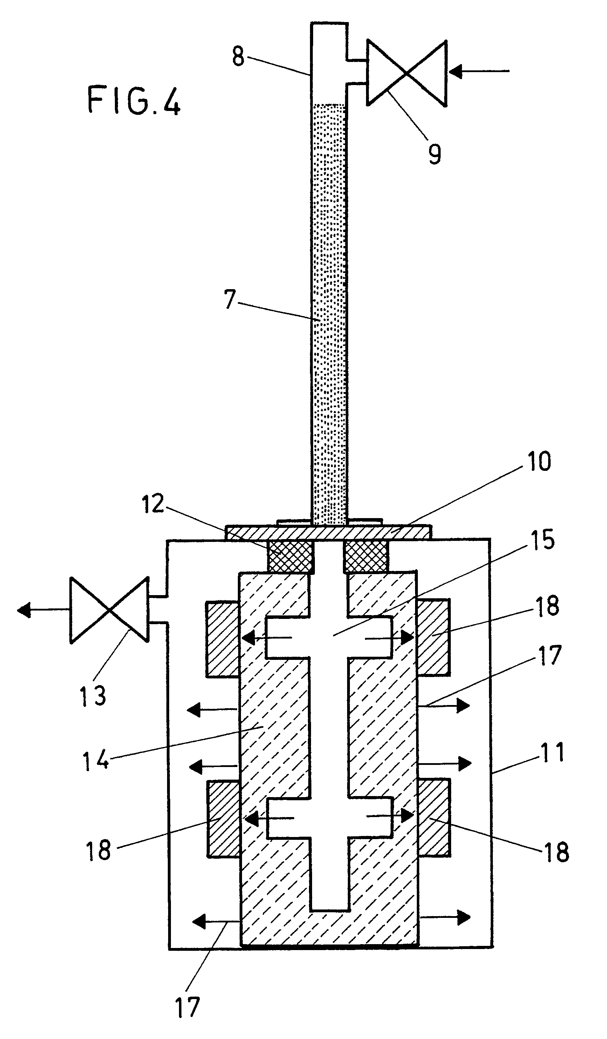

In Fig.4 ist ein Aufriss/Schnitt einer Vorrichtung zur Durchführung des Verfahrens mit Berstfolie und Strömungsblenden an der Negativform vor dem Einblasen des Pulvers dargestellt. Die Bezugszeichen 7 bis 15 und 17 entsprechen grundsätzlich denjenigen der Figur 3, wenngleich gewisse Elemente der Vorrichtung eine abweichende Gestalt aufweisen. Das Sperrorgan 10 für das Pulver 7 ist im vorliegenden Fall als flache ebene Berstfolie ausgeführt. Der Hohlraum 15 der Negativform 14 ist leer gezeichnet (Zustand vor dem Einblasen des Pulvers). An der Aussenwand der Negativform 14 sind an gewissen Stellen gasdichte Strömungsblenden 18 befestigt, welche zur zusätzlichen Steuerung der Gasströmung dienen.

Diese Figur entspricht dem Beispiel einer Ausführungsform. Dabei befindet sich das Pulver 7 in einem zylindrischen Behälter 8, welcher ohne wesentliche Abnahme des Querschnitts durch das Dichtungselement 12 bis zum Eingang des Formhohlraums 15 geht. Im vorliegenden Falle ist das Sperrorgan 10 als Folie ausgebildet, welche jeweils vor einem Schiessvorgang erneuert wird und die bei Erreichung eines bestimmten Differenzdruckes zwischen dem Behälter 8 sowie dem Formhohlraum 15 birst, wonach das Pulver infolge des ohne wesentliche Querschnitteinbusse ausgebildeten Zuführungskanals schlagartig in den Formhohlraum eintritt, wo es durch die Expansion des im Zwischenkornvolumen befindlichen Gases in alle Richtungen fluidisiert wird. Die Figur enthält noch eine andere Konstruktionsvariante, die in beispielhafter Weise, jedoch nicht notwendigerweise mit der vorher beschriebenen Ausführung von Vorratsbehälter 8 und Sperrorgan kombiniert sein muss: Falls die Gasströmung bei Formen mit einem hohen Komplexitätsgrad bevorzugt an gewisse Stellen innerhalb des Formhohlraumes geleitet werden soll, etwa bei tiefen Hinterschneidungen, dann können Strömungsblenden 18 aussen an der Form dort als Strömungshindernis angebracht werden, wo lokal eine verminderte Abströmung aus dem Forminnenraum erwünscht ist.

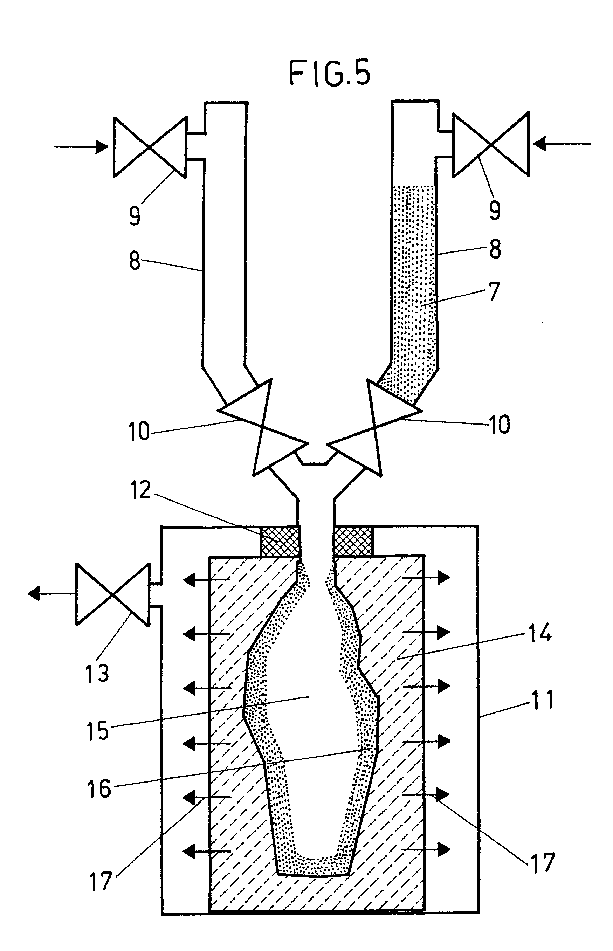

Fig.5 zeigt einen Aufriss/Schnitt einer Vorrichtung zur Durchführung des Verfahrens mit mehreren Vorratsbehältern für verschiedene Pulver bei teilweise gefüllter Negativform. Alle Bezugszeichen 7 bis 17 entsprecjen genau denjenigen von Figur 3. Grundsätzlich ist hier auch der gleiche Moment der teilweisen Pulverfüllung des Hohlraumes 15 der Negativform 14 festgehalten. Im vorliegenden Fall sind jedoch mehrere Vorratsbehälter 8 für verschiedene Pulver 7 inklusive entsprechende Steuerorgane vorhanden. Es können demnach verschiedene Pulver gleichzeitig oder nacheinander oder abwechslungsweise nach jedem beliebigen Programm in den Hohlraum 15 eingeschossen werden. Es kann auch zusätzlich über einen Vorratsbehälter 8 lediglich weiteres Transportgas ohne Pulver zur Beeinflussung der Fluidisierung des aus einem benachbarten Vorratsbehälter stammenden Pulvers 7 eingeblasen werden.

Die Figur zeigt ein weiteres Beispiel einer erfindungsgemässen Vorrichtung, wo mehrere Pulver hintereinander in eine Form eingebracht werden können. Im vorliegenden Beispiel soll dies mit zwei Pulvern beschrieben werden. Dabei befinden sich ein feinkörnigeres und damit besser dichtsinterndes Metallpulver in dem einen Vorratsbehälter 8 (links), ein gröberes Metallpulver derselben Zusammensetzung hingegen im anderen Vorratsbehälter 8 (rechts), wobei beide Behälter über je ein Sperrorgan 10 und ein gemeinsames Dichtungselement 12 mit dem Eingang des Innenraumes 15 der Form 14 verbunden sind. Nach Öffnung des ersten Sperrorgans gelangt zuerst das feinkörnige Pulver in den Innenraum und bildet dort die Aussenschicht des Formkörpers. Nach dem Öffnen des zweiten Sperrorgans wird der Rest des Formkörpers mit dem gröberen Pulver aufgefüllt. Beim anschliessenden Sintervorgang kommt es zu einem frühzeitigen Dichtsintern der feinkörnigen Oberfläche, sodass der Formkörper in einem heissisostatischen Prozess nachverdichtet werden kann.

Bei der Herstellung einer Turbinenschaufel aus einem 13-% Chromstahl wurde ein Metallpulver mit einer Korngrösse von 20 bis 70 $\mu$m in einer Anordnung entsprechend Fig. 4 in eine poröse Keramikform abgefüllt. Dabei wurde eine Haushalt-Aluminiumfolie als Absperrorgan verwendet, wobei der Durchmesser der Auslassöffnung des Vorratsbehälters 8 bei 12 mm lag. Nachdem die im Behälter 11 befindliche Form 14 auf einen Druck unterhalb 50 mbar evakuiert worden war, wurde der Druck in dem das Pulver enthaltenden Vorratsbehälter 8 gesteigert, bis bei 2,3 bar die Alufolie barst, wobei der Innenraum 15 augenblicklich aufgefüllt wurde. Parallelversuche, die mit demselben Pulver in derselben Form, jedoch mit einer Füllung auf dem Vibrationstisch durchgeführt wurden, ergaben Formkörpergewichte, die 3 - 5 % tiefer lagen.

Die Erfindung ist nicht auf die den Figuren entsprechenden Ausführungsbeispiele beschränkt.

Das Verfahren zur Herstellung eines beliebig kompliziert geformten Bauteils aus einem metallischen oder keramischen Werkstoff oder einem Kunststoff besteht in der Erzeugung eines dichtgepackten Formkörpers ausgehend von einem rieselfähigen Pulver 7 oder einer Pulvermischung durch Einblasen des besagten, durch ein Transportgas fluidisierten Pulvers 7 in eine unter vermindertem Druck stehende Negativform 14 und Weiterbehandlung des vorverdichteten Körpers, indem dieser einem Sinterprozess unterworfen wird, und gliedert sich in die nachfolgenden Teilschritte:

- Einführen einer die Gestalt des Bauteils bestimmenden, aus einem porösen, gasdurchlässigen, jedoch für das Pulver 7 zumindest in der Oberflächenzone der Innenwand nicht durchlässigen Material bestehenden Negativform 14 in einen unter vermindertem Druck stehenden Behälter 11, wobei für das Aufschleudern des Pulvers auf die Innenwand gleichmässige Gasströmungsverhältnisse geschaffen werden,
- Einblasen des Pulvers 7 in den Hohlraum 15 der Negativform 14 unter Verwendung eines unter hohem Druck stehenden Transportgases, wobei eine für die Weiterbehandlung des Grünlings ausreichende Grünfestigkeit erzielt wird,
- Fluten des Behälters 11 zur Herstellung des Druckausgleichs in der Negativform 14,
- Herausnehmen der Negativform 14 mitsamt dem Grünling aus dem Behälter 11 zwecks Weiterbehandlung,
- Sintern des Grünlings.

Das Verfahren wird durchgeführt, indem eine geteilte Negativform 14 als Dauerform benutzt und der Grünling nach der Vorverdichtung aus der Negativform 14 entfernt, in eine seine Gestalt wahrende keramische Stützmasse eingebettet und in dieser gesintert wird, oder indem eine ungeteilte Negativform 14 aus einem keramischen Material verwendet wird, welche bei der Weiterbehandlung des Grünlings als Stützmasse dient und im Verlauf oder nach Ablauf des Sinterprozesses bei Erreichen einer ausreichenden Festigkeit des Bauteils durch Zerstörung entfernt wird.

Als Transportgas wird vorteilhafterweise das gleiche Gas benutzt, das sich im Behälter 11, im Totraum und im Zwischenkornvolumen des Pulvers 7 vor dem Einblasen befindet. Gemäss einer Variante wird während mindestens eines Teils der Zeitdauer des Einblasens des Pulvers 7 zusätzlich separates Transportgas zur Erhöhung der Fluidität des Pulverstrahls injiziert. Gemäss einer weiteren Variante wird die Pulvermenge derart dosiert, dass sie nicht das gesamte Innenvolumen 15 der Negativform 14 ausfüllt, dergestalt, dass als Bauteil ein Hohlkörper erzeugt wird.

Zur Erzeugung eines geschichteten Formkörpers wird gleichzeitig oder nacheinander Pulver 7 verschiedener Korngrösse, verschiedener Granulometrie, und/oder verschiedener Partikelform und/oder verschiedener Zusammensetzung in den Hohlraum 15 der Negativform 14 eingeblasen. In einer speziellen Variante des Verfahrens werden gleichzeitig oder nacheinander metallische und/oder keramische und/oder Kunststoffpulver verwendet.

Die Vorrichtung zur Durchführung des Verfahrens besteht aus mindestens einem mit einem Ventil 9 für die Zufuhr des Transportgases und einem Sperrorgan 10 für das Einblasen des Pulvers 7 versehenen Vorratsbehälter 8 für das letztere, einem mit einer Dichtung 12 versehenen, unter vermindertem Druck stehenden und ein Auslassventil 13 aufweisenden Behälter 11 sowie einer in diesem untergebrachten gasdurchlässigen Negativform 14. In einer speziellen Ausbildung der Vorrichtung besteht das Sperrorgan 10 des Vorratsbehälters 8 aus einer Berstfolie und die gasdurchlässige Negativform 14 ist an den Stellen, die vom herzustellenden Bauteil bedingt eine verminderte Gasströmung erfordern, auf der Aussenwand mit gasdichten Strömungsblenden 18 versehen.

**Patentansprüche**

1. Verfahren zur Herstellung eines beliebig kompliziert geformten Bauteils aus einem metallischen oder keramischen Werkstoff oder einem Kunststoff durch Erzeugung eines dichtgepackten Formkörpers ausgehend von einem rieselfähigen Pulver (7) oder einer Pulvermischung durch Einblasen des besagten, durch ein Transportgas fluidisierten Pulvers (7) in eine unter vermindertem Druck stehende Negativform (14) und Weiterbehandlung des vorverdichteten Körpers, indem dieser einem Sinterprozess unterworfen wird, dadurch gekennzeichnet, dass es aus den nachfolgenden Teilschritten besteht:

   - Einführen einer die Gestalt des Bauteils bestimmenden, aus einem porösen, gasdurchlässigen, jedoch für das Pulver (7) zumindest in der Oberflächenzone der Innenwand nicht durchlässigen Material bestehenden Negativform (14) in einen unter vermindertem Druck stehenden Behälter (11), wobei für das Aufschleudern des Pulvers auf die Innenwand gleichmässige Gasströmungsverhältnisse geschaffen werden,
   - Einblasen des Pulvers (7) in den Hohlraum (15) der Negativform (14) unter Verwendung eines unter hohem Druck stehenden Transportgases, wobei eine für die Weiterbehandlung des Grünlings ausreichende Grünfestigkeit erzielt wird,
   - Fluten des Behälters (11) zur Herstellung des Druckausgleichs in der Negativform (14),
   - Herausnehmen der Negativform (14) mitsamt dem Grünling aus dem Behälter (11) zwecks Weiterbehandlung,
   - Sintern des Grünlings.

2. Verfahren nach Anspruch 1, dadurch gekennzeichnet, dass eine geteilte Negativform (14) als Dauerform benutzt und der Grünling nach der Vorverdichtung aus der Negativform (14) entfernt, in eine seine Gestalt wahrende keramische Stützmasse eingebettet und in dieser gesintert wird.

3. Verfahren nach Anspruch 1, dadurch gekennzeichnet, dass eine ungeteilte Negativform (14) aus einem keramischen Material verwendet wird, welche bei der Weiterbehandlung des Grünlings als Stützmasse dient und im Verlauf oder nach Ablauf des Sinterprozesses bei Erreichen einer ausreichenden Festigkeit des Bauteils durch Zerstörung entfernt wird.

4. Verfahren nach Anspruch 1, dadurch gekennzeichnet, dass als Transportgas das gleiche Gas benutzt wird, das sich im Behälter (11), im Totraum und im Zwischenkornvolumen des Pulvers (7) vor dem Einblasen befindet.

5. Verfahren nach Anspruch 1, dadurch gekennzeichnet, dass während mindestens eines Teils der Zeitdauer des Einblasens des Pulvers (7) zusätzlich separates Transportgas zur Erhöhung der Fluidität des Pulverstrahls injiziert wird.

6. Verfahren nach Anspruch 1, dadurch gekennzeichnet, dass die Pulvermenge derart dosiert ist, dass sie nicht das gesamte Innenvolumen (15) der Negativform (14) ausfüllt, dergestalt, dass als Bauteil ein Hohlkörper erzeugt wird.

7. Verfahren nach Anspruch 1, dadurch gekennzeichnet, dass gleichzeitig oder nacheinander zur Erzeugung eines geschichteten Formkörpers Pulver (7) verschiedener Korngrösse, verschiedener Granulometrie, und/oder verschiedener Partikelform und/oder verschiedener Zusammensetzung in den Hohlraum (15) der Negativform (14) eingeblasen werden.

8. Verfahren nach Anspruch 7, dadurch gekennzeichnet, dass gleichzeitig oder nacheinander metallische und/oder keramische und/oder Kunststoffpulver verwendet werden.

9. Vorrichtung zur Durchführung des Verfahrens nach Anspruch 1, dadurch gekennzeichnet, dass sie aus mindestens einem mit einem Ventil (9) für die Zufuhr des Transportgases und einem Sperrorgan (10) für das Einblasen des Pulvers (7) versehenen Vorratsbehälter (8) für das letztere, einem mit einer Dichtung (12) versehenen, unter vermindertem Druck stehenden und ein Auslassventil (13) aufweisenden Behälter (11) sowie einer in diesem untergebrachten gasdurchlässigen Negativform (14) besteht.

10. Vorrichtung nach Anspruch 9, dadurch gekennzeichnet, dass das Sperrorgan (10) des Vorratsbehälters (8) als Berstfolie ausgebildet ist und dass die gasdurchlässige Negativform (14) an den Stellen, die vom herzustellenden Bauteil bedingt eine verminderte Gasströmung erfordern, auf der Aussenwand mit gasdichten Strömungsblenden (18) versehen ist.

# FIG.1

A-A

# FIG.2

# FIG.3

FIG.4

# FIG.5

**Europäisches
Patentamt**

**EUROPÄISCHER
RECHERCHENBERICHT**

Nummer der Anmeldung

**EP 91 10 2389**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-3 101 236  (E. BÜHLER ET AL)<br>* Ansprüche 1,2,22 *<br>– – – | 1-10 | B 28 B 13/02<br>B 28 B 7/34<br>B 22 F 3/00 |
| Y | GB-A-2 187 995  (HONDA GIKEN KOGYO KK)<br>– – – | 1-10 | B 22 F 5/00<br>B 22 F 3/12 |
| Y | CH-A-4 620 24  (MATEC HOLDING AG)<br>* Ansprüche 1,15 *<br>– – – – – | 1,10 | |

| RECHERCHIERTE SACHGEBIETE (Int. Cl.5) |
|---|
| B 28 B<br>B 22 F |

Der vorliegende Recherchenbericht wurde für alle Patentansprüche erstellt

| Recherchenort | Abschlußdatum der Recherche | Prüfer |
|---|---|---|
| Den Haag | 21 Juni 91 | SCHRUERS H.J. |